# EUROPEAN PATENT APPLICATION

(11) **EP 4 614 884 A1**
(43) Date of publication of application: **10.09.2025**
(21) Application number: 25161753.6
(22) Date of filing: 05.03.2025
(51) Int. Cl.: H04L 9/40, G06F 21/57

(54) **SECURITY RISK LEVEL ASSESSMENT OF ASSETS AND SOFTWARE COMPONENTS**

(30) Priority: 05.03.2024 US 202418596252
(71) Applicant: Solarwinds Worldwide, LLC, Austin, TX 78735 (US)
(72) Inventor: KONGARA, Sarat Chandra Chowdary, Newark, CA 94560 (US); GRANDHI, Satish, San Jose, CA 95129 (US); RAJARAM, Vijay, Fremont, CA 94555 (US)
(74) Representative: TBK

(57) **Abstract**

Systems, methods, apparatuses, and computer program products for determining a security risk of a computer network based upon a topology of the computer network. One method may include receiving, by a network entity, an indication of at least one network condition from at least one client device; determining, by the network entity, at least one risk level associated with the at least one client device according to the at least one received network condition; and transmitting, by the network entity, at least one instruction to the at least one client device to perform at least one action associated with resolving the at least one risk level.

## Description

### TECHNICAL FIELD

Some example embodiments may generally relate to monitoring for, identifying, and responding to security risks and vulnerabilities within a computer network. For example, certain example embodiments may relate to systems and/or methods for determining a security risk of a computer network based upon a topology of the computer network.

### BACKGROUND

In an enterprise architecture, information technology (IT) and software development/IT operations (DevOps) teams frequently manage a plurality of cloud and/or data center assets, which could include any software components and devices that run software components. When new security exposures or vulnerabilities are identified, IT/DevOps teams need to prioritize software updates based upon the criticality of the assets, as well as whether the exposures or vulnerabilities are impacting the assets. However, current techniques for providing risk and security solutions generally rely on scanned data, with no visibility or understanding of the asset within a network topology.

### SUMMARY

In accordance with some example embodiments, a method may include receiving, by a network entity, an indication of at least one network condition from at least one client device. The method may further include determining, by the network entity, at least one risk level associated with the at least one client device according to the at least one received network condition. The method may further include transmitting, by the network entity, at least one instruction to the at least one client device to perform at least one action associated with resolving the at least one risk level.

In accordance with certain example embodiments, an apparatus may include means for receiving an indication of at least one network condition from at least one client device. The apparatus may further include means for determining at least one risk level associated with the at least one client device according to the at least one received network condition. The apparatus may further include means for transmitting at least one instruction to the at least one client device to perform at least one action associated with resolving the at least one risk level.

In accordance with various example embodiments, a non-transitory computer readable medium may include program instructions that, when executed by an apparatus, cause the apparatus to perform at least a method. The method may include receiving an indication of at least one network condition from at least one client device. The method may further include determining at least one risk level associated with the at least one client device according to the at least one received network condition. The method may further include transmitting at least one instruction to the at least one client device to perform at least one action associated with resolving the at least one risk level.

In accordance with some example embodiments, a computer program product may perform a method. The method may include receiving an indication of at least one network condition from at least one client device. The method may further include determining at least one risk level associated with the at least one client device according to the at least one received network condition. The method may further include transmitting at least one instruction to the at least one client device to perform at least one action associated with resolving the at least one risk level.

In accordance with certain example embodiments, an apparatus may include at least one processor and at least one memory storing instructions that, when executed by the at least one processor, cause the apparatus at least to receive an indication of at least one network condition from at least one client device. The at least one memory and instructions, when executed by the at least one processor, may further cause the apparatus at least to determine at least one risk level associated with the at least one client device according to the at least one received network condition. The at least one memory and instructions, when executed by the at least one processor, may further cause the apparatus at least to transmit at least one instruction to the at least one client device to perform at least one action associated with resolving the at least one risk level.

In accordance with various example embodiments, an apparatus may include receiving circuitry configured to perform receiving an indication of at least one network condition from at least one client device. The apparatus may further include determining circuitry configured to perform determining at least one risk level associated with the at least one client device according to the at least one received network condition. The apparatus may further include transmitting circuitry configured to perform transmitting at least one instruction to the at least one client device to perform at least one action associated with resolving the at least one risk level.

### BRIEF DESCRIPTION OF THE DRAWINGS

For a proper understanding of example embodiments, reference should be made to the accompanying drawings, wherein:
FIG. 1 illustrates an example of a signaling diagram according to certain example embodiments;
FIG. 2 illustrates an example of a flow diagram of a method according to various example embodiments;
FIG. 3 illustrates an example of various network devices according to some example embodiments.

### DETAILED DESCRIPTION

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for determining a security risk of a computer network based upon a topology of the computer network is not intended to limit the scope of certain example embodiments, but is instead representative of selected example embodiments.

Certain example embodiments described herein may have various benefits and/or advantages to overcome the disadvantages described above. For example, certain example embodiments may incorporate information about assets and network topology into an evaluation of network risk, in addition to scanned data, thereby providing network observability based upon security information. Thus, certain example embodiments discussed below are directed to improvements in computer-related technology.

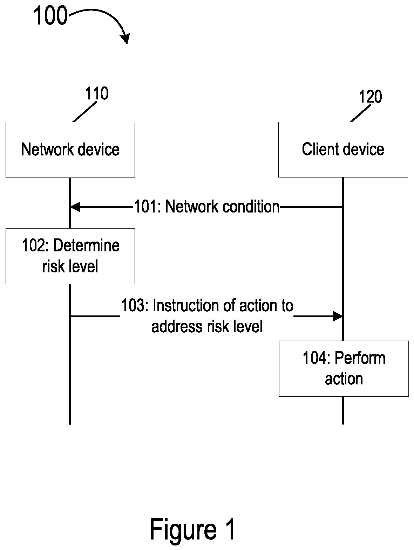

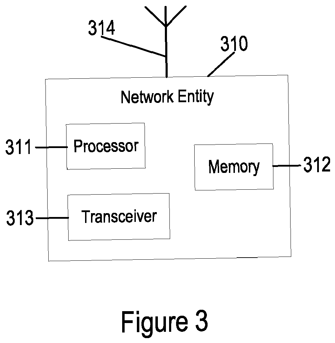

FIG. 1 illustrates an example of a signaling diagram 100 depicting techniques for determining a security risk of a computer network based upon a topology of the computer network. Network device 110 and client device 120 may be similar to NE 310, as illustrated in FIG. 3, according to certain example embodiments. Network device 110 and client device 120 may be connected via network 130.

At operation 101, client device 120 may transmit to network device 110 at least one indication of a network condition. For example, the network condition may include any of a software version number, intrusion occurrence, vulnerability scan, or last update date/time.

In some example embodiments, transmitting the indication of the network condition may include any of: network device 110 polling client device 120 to determine whether client device 120 has been exposed to the public internet; network device 110 using APIs to determine whether client device 120 has been exposed to the public internet; network device 120 using cloud APIs to determine a status of client device 120 (i.e., whether client device 120 can connect to public internet); network device 110 receiving a feed from a security scanner or software indicating software vulnerabilities based upon an application, service, and/or operation system run by client device 120; network device 110 assessing a network path to client device 120 via public network, which may provide further analysis of netflow data and/or defined security groups; and/or network device 110 transmitting alerts indicating received runtime privilege changes implemented on client device 120.

In certain example embodiments, client device 120 may be at least one of a data center asset, such as a server, storage, or power distribution unit. Client device 120 may also include at least one application, operating system (OS), basic input/output system (BIOS), and peripheral (e.g., printer, display, scanning device).

At operation 102, network device 110 may determine at least one risk level associated with client device 120 according to the at least one received network condition. For example, the risk level may be based, at least in part, on a position of client device 120 within the network and/or accessibility to the public internet (*i.e.,* non-private, external).

For example, a risk level of client device 120 may be assessed according to any number of parameters received by network device 110, such as vulnerability information and related exploitability information regarding software running on client device 120; whether ports of client device 120 are exposed to the public internet; protocol exploits or protocol misconfigurations; security scanner information; threat intelligence information received from other sources, abnormal traffic patterns detected on client device 120 (*e.g.,* increased traffic); abnormal requests received on client device 120 (*e.g.,* increase in request rate); criticality and sensitivity of applications running on client device 120 that may be determined based upon tags and/or regions where client device 120 is deployed; and/or an aggregated risk of multiple client devices running together as an application.

As an example, upon network device 110 determining that client device 120 has a security exposure and/or is accessible from the public internet, network device 110 may designate client device 120 with a first predetermined risk categorization (*e.g.,* critical).

Accessibility of client device 120 to the public internet may be determined using a network topology indicating a network path traversal; this may be performed by evaluating security groups and/or network configuration information, such as firewall rules.

In various example embodiments, network device 110 may adjust the risk categorization of client device 120 lower or higher (*e.g.,* critical to urgent, urgent to critical, urgent to important, important to urgent, etc.).

In certain example embodiments, network device 110 may associate client device 120 with one or more asset tags to apply the determined risk level. Asset tags may prioritize production networks higher than development networks and/or enterprise test assets.

In some example embodiments, network device 110 may perform the at least one determination based upon a plurality of received network conditions from a respective plurality of other client devices, which may also be similar to NE 310, as illustrated in FIG. 3.

At operation 103, network device 110 may transmit at least one instruction indicating at least one action for client device 120 to perform. The at least one instruction may be associated with resolving the at least one determination at operation 102.

For example, the at least one action for client device 120 to perform may include any of disabling security groups; automatically updating client device 120 with software updates; running an action script configured to remove or stop services from running on client device 120; disabling client device 120 on a network; changing a configuration on client device 120, such as a change to application or protocol settings; applying a rule in a firewall and/or web application firewall; enforcing security groups in a cloud environment; requesting a software update on client device 120; and/or transmitting an alert to an operator indicating an issue to be resolved.

At operation 104, client device 120 may perform the at least one action indicated in the at least one instruction transmitted at operation 103. This may reduce a risk level of client device 120.

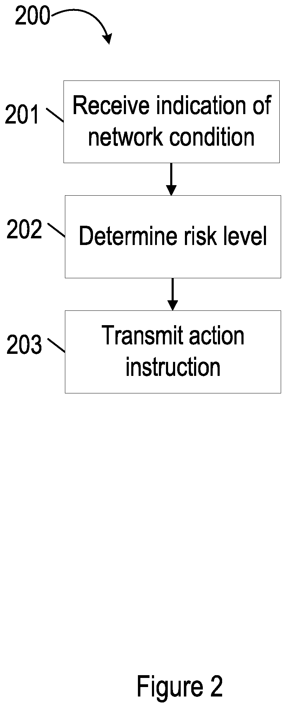

FIG. 2 illustrates an example of a flow diagram of a method 200 that may be performed by a computing device, such as NE 310 illustrated in FIG. 3, according to various example embodiments.

At step 201, the method may include receiving, by the NE, an indication of at least one network condition from at least one client device, such as NE 310 illustrated in FIG. 3. For example, the at least one network condition may include at least one of a software version number, intrusion occurrence, vulnerability scan, or last update date/time.

In various example embodiments, the at least one network condition may include at least one of vulnerability information and related exploitability information regarding software running on the at least one client device; at least one indication of whether at least one port of the at least one client device is exposed to the public internet; at least one protocol exploit; at least one protocol misconfiguration; at least one indication of abnormal traffic patterns detected on the at least one client device; at least one indication of abnormal requests received by the at least one client device; or at least one indication of criticality and sensitivity of at least one application running on the at least one client device.

At step 202, the method may further include determining, by the network entity, at least one risk level associated with the at least one client device according to the at least one received network condition. For example, the risk level may be at least partially based on a position of the at least one client device within a network or accessibility to the public internet.

In some example embodiments, the at least one risk level may be further determined based upon at least one of security scanner information; threat intelligence information received from at least one other network entity; or an aggregated risk of a plurality of client devices running together as an application.

At step 203, the method may further include transmitting, by the network entity, at least one instruction to the at least one client device to perform at least one action associated with resolving the at least one risk level.

In various example embodiments, the at least one action may include at least one of disabling at least one security group; automatically updating the at least one client device with at least one software update; running at least one action script configured to remove or stop services from running on the at least one client device; disabling the at least one client device on a network; changing a configuration on the at least one client device; applying at least one rule in at least one firewall or at least one web application firewall; enforcing at least one security group in a cloud environment; requesting at least one software update on the at least one client device; or transmitting at least one alert to at least one operator indicating at least one issue to be resolved.

In certain example embodiments, the method may further include any of polling, by the network entity, the at least one client device to determine whether the client device has been exposed to the public internet; determining, by the network entity, whether the at least one client device has been exposed to a public internet based upon at least one API; determining, by the network entity, a status of the at least one client device based upon at least one cloud API; receiving, by the network entity, a feed from a security scanner or software indicating software vulnerabilities based upon at least one of an application, service, or operation system run by the at least one client device; assessing, by the network entity, a network path to the at least one client device via a public network; or transmitting by the network entity, at least one alert indicating received runtime privilege changes implemented on the at least one client device.

In some example embodiments, the method may further include designating, by the network entity, the at least one client device with a first predetermined risk categorization.

In various example embodiments, the method may further include determining, by the network entity, accessibility of the at least one client device to a public internet using a network topology indicating a network path traversal.

FIG. 3 illustrates an example of a system according to certain example embodiments. In one example embodiment, a system may include multiple devices, such as, for example, NE 310.

NE 310 may include one or more servers, and/or one or more applications. For example, NE 310 may include a Kubernetes (*i.e.,* automated container management) cluster configured to manage a complete service or group of services that together run in a virtual machine, or a plurality of servers/VMs that together run an application infrastructure.

NE 310 may include one or more of a server, a serving gateway, a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 310 may be one or more of a citizens broadband radio service device (CBSD).

NE 310 may include at least one processor, indicated as 311. Processor 311 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 312. The memory may be fixed or removable. The memory may include computer program instructions or computer code contained therein. Memory 312 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (*e.g.*, random access memory (RAM) vs. read-only memory (ROM)). A hard disk drive (HDD), RAM, flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processor 311, memory 312, and any subset thereof, may be configured to provide means corresponding to the various blocks of FIG. 1. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 3, transceiver 313 may be provided, and one or more devices may also include at least one antenna, illustrated as 314. The device may have many antennas, such as an array of antennas configured for multiple input multiple output (MIMO) communications, or multiple antennas for multiple RATs. Other configurations of these devices, for example, may be provided. Transceiver 313 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIG. 1). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIG. 1. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.,* firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to certain example embodiments, processor 311, and memory 312, may be included in or may form a part of processing circuitry or control circuitry. In addition, in some example embodiments, transceiver 313 may be included in or may form a part of transceiving circuitry.

In some example embodiments, an apparatus (e.g., NE 310) may include means for performing a method, a process, or any of the variants discussed herein. Examples of the means may include one or more processors, memory, controllers, transmitters, receivers, and/or computer program code for causing the performance of the operations.

In various example embodiments, apparatus 310 may be controlled by memory 312 and processor 311 to receive an indication of at least one network condition from at least one client device; determine at least one risk level associated with the at least one client device according to the at least one received network condition; and transmit at least one instruction to the at least one client device to perform at least one action associated with resolving the at least one risk level.

Certain example embodiments may be directed to an apparatus that includes means for performing any of the methods described herein including, for example, means for means for receiving an indication of at least one network condition from at least one client device; means for determining at least one risk level associated with the at least one client device according to the at least one received network condition; and means for transmitting at least one instruction to the at least one client device to perform at least one action associated with resolving the at least one risk level.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- API: Application Programming Interface
- ASIC: Application Specific Integrated Circuit
- BIOS: Basic Input/Output System
- CBSD: Citizens Broadband Radio Service Device
- CPU: Central Processing Unit
- DevOps: Development Operations
- GPS: Global Positioning System
- HDD: Hard Disk Drive
- IT: Information Technology
- MEMS: Micro Electrical Mechanical System
- MIMO: Multiple Input Multiple Output
- OS: Operating System
- PDA: Personal Digital Assistance
- RAM: Random Access Memory
- ROM: Read-Only Memory

## Claims

1. A method comprising:
receiving, by a network entity, an indication of at least one network condition from at least one client device;
determining, by the network entity, at least one risk level associated with the at least one client device according to the at least one received network condition; and
transmitting, by the network entity, at least one instruction to the at least one client device to perform at least one action associated with resolving the at least one risk level.

2. The method of claim 1, further comprising:
polling, by the network entity, the at least one client device to determine whether the client device has been exposed to the public internet;
determining, by the network entity, whether the at least one client device has been exposed to a public internet based upon at least one application programming interface (API);
determining, by the network entity, a status of the at least one client device based upon at least one cloud API;
receiving, by the network entity, a feed from a security scanner or software indicating software vulnerabilities based upon at least one of an application, service, or operation system run by the at least one client device;
assessing, by the network entity, a network path to the at least one client device via a public network; or
transmitting by the network entity, at least one alert indicating received runtime privilege changes implemented on the at least one client device.

3. The method of claim 1, wherein the at least one network condition comprises at least one of the following:
vulnerability information and related exploitability information regarding software running on the at least one client device;
at least one indication of whether at least one port of the at least one client device is exposed to the public internet;
at least one protocol exploit;
at least one protocol misconfiguration;
at least one indication of abnormal traffic patterns detected on the at least one client device;
at least one indication of abnormal requests received by the at least one client device; or
at least one indication of criticality and sensitivity of at least one application running on the at least one client device.

4. The method of claim 1, wherein the at least one risk level is further determined based upon at least one of the following:
security scanner information;
threat intelligence information received from at least one other network entity; or
an aggregated risk of a plurality of client devices running together as an application.

5. The method of claim 1, wherein the at least one action comprises at least one of the following:
disabling at least one security group;
automatically updating the at least one client device with at least one software update;
running at least one action script configured to remove or stop services from running on the at least one client device;
disabling the at least one client device on a network;
changing a configuration on the at least one client device;
applying at least one rule in at least one firewall or at least one web application firewall;
enforcing at least one security group in a cloud environment;
requesting at least one software update on the at least one client device; or
transmitting at least one alert to at least one operator indicating at least one issue to be resolved.

6. The method of claim 1, wherein the at least one network condition comprises at least one of a software version number, intrusion occurrence, vulnerability scan, or last update date/time.

7. The method of claim 1, wherein the risk level may be at least partially based on a position of the at least one client device within a network or accessibility to the public internet.

8. The method of claim 1, further comprising:
designating, by the network entity, the at least one client device with a first predetermined risk categorization.

9. The method of claim 1, wherein the determining further comprising:
determining, by the network entity, accessibility of the at least one client device to a public internet using a network topology indicating a network path traversal.

10. An apparatus comprising:
at least one processor; and
at least one memory storing instructions that, when executed by the at least one processor, cause the apparatus at least to:
receive an indication of at least one network condition from at least one client device;
determine at least one risk level associated with the at least one client device according to the at least one received network condition; and
transmit at least one instruction to the at least one client device to perform at least one action associated with resolving the at least one risk level.

11. The apparatus of claim 10, wherein the at least one memory and the instructions, when executed by the at least one processor, further cause the apparatus at least to:
poll the at least one client device to determine whether the client device has been exposed to the public internet;
determine whether the at least one client device has been exposed to a public internet based upon at least one application programming interface (API);
determine a status of the at least one client device based upon at least one cloud API;
receive a feed from a security scanner or software indicating software vulnerabilities based upon at least one of an application, service, or operation system run by the at least one client device;
assess a network path to the at least one client device via a public network; or
transmit at least one alert indicating received runtime privilege changes implemented on the at least one client device.

12. The apparatus of claim 10, wherein the at least one network condition comprises at least one of the following:
vulnerability information and related exploitability information regarding software running on the at least one client device;
at least one indication of whether at least one port of the at least one client device is exposed to the public internet;
at least one protocol exploit;
at least one protocol misconfiguration;
at least one indication of abnormal traffic patterns detected on the at least one client device;
at least one indication of abnormal requests received by the at least one client device; or
at least one indication of criticality and sensitivity of at least one application running on the at least one client device.

13. The apparatus of claim 10, wherein the at least one risk level is further determined based upon at least one of the following:
security scanner information;
threat intelligence information received from at least one other network entity; or
an aggregated risk of a plurality of client devices running together as an application.

14. The apparatus of claim 10, wherein the at least one action comprises at least one of the following:
disabling at least one security group;
automatically updating the at least one client device with at least one software update;
running at least one action script configured to remove or stop services from running on the at least one client device;
disabling the at least one client device on a network;
changing a configuration on the at least one client device;
applying at least one rule in at least one firewall or at least one web application firewall;
enforcing at least one security group in a cloud environment;
requesting at least one software update on the at least one client device; or
transmitting at least one alert to at least one operator indicating at least one issue to be resolved.

15. The apparatus of claim 10, wherein the at least one network condition comprises at least one of a software version number, intrusion occurrence, vulnerability scan, or last update date/time.

16. The apparatus of claim 10, wherein the risk level may be at least partially based on a position of the at least one client device within a network or accessibility to the public internet.

17. The apparatus of claim 10, wherein the at least one memory and the instructions, when executed by the at least one processor, further cause the apparatus at least to:
designate the at least one client device with a first predetermined risk categorization.

18. The apparatus of claim 10, wherein the at least one memory and the instructions, when executed by the at least one processor, further cause the apparatus at least to:
determine accessibility of the at least one client device to a public internet using a network topology indicating a network path traversal.

19. An apparatus comprising:
means for receiving an indication of at least one network condition from at least one client device;
means for determining at least one risk level associated with the at least one client device according to the at least one received network condition; and
means for transmitting at least one instruction to the at least one client device to perform at least one action associated with resolving the at least one risk level.

20. The apparatus of claim 19, further comprising:
means for polling the at least one client device to determine whether the client device has been exposed to the public internet;
means for determining whether the at least one client device has been exposed to a public internet based upon at least one application programming interface (API);
means for determining a status of the at least one client device based upon at least one cloud API;
means for receiving a feed from a security scanner or software indicating software vulnerabilities based upon at least one of an application, service, or operation system run by the at least one client device;
means for assessing a network path to the at least one client device via a public network; or
means for transmitting at least one alert indicating received runtime privilege changes implemented on the at least one client device.
